# FASCICULE DE BREVET EUROPEEN

(11) **EP 3 554 102 B1**
(45) Date de publication et mention de la délivrance du brevet: **04.11.2020**
(21) Numéro de dépôt: 19168119.6
(22) Date de dépôt: 09.04.2019
(51) Int. Cl.: H04W 4/02, H04M 1/60, H04L 29/08, H04W 4/80

(54) **PROCÉDÉ D' ÉTABLISSEMENT AUTOMATIQUE D'UNE CONNEXION SANS FIL ENTRE UN TERMINAL MOBILE ET UN CALCULATEUR MULTIMÉDIA D'UN VÉHICULE**
VERFAHREN ZUR AUTOMATISCHEN HERSTELLUNG EINER DRAHTLOSEN VERBINDUNG ZWISCHEN EINEM MOBILEN ENDGERÄT UND EINEM MULTIMEDIARECHNER EINES FAHRZEUGS
METHOD FOR AUTOMATICALLY ESTABLISHING A WIRELESS CONNECTION BETWEEN A MOBILE TERMINAL AND A MULTIMEDIA COMPUTER OF A VEHICLE

(30) Priorité: 13.04.2018 FR 1853249
(43) Date de publication de la demande: 16.10.2019
(73) Titulaire: RENAULT s.a.s., 92100 Boulogne-Billancourt (FR)
(72) Inventeur: BERTRAND, Patrice, 31170 Tournefeuille (FR)

(56) Documents cités:
- WO-A1-2017/108370
- FR-A1- 2 986 686
- US-B1- 8 897 704

## Description

### DOMAINE TECHNIQUE AUQUEL SE RAPPORTE L'INVENTION

La présente invention concerne de manière générale les connexions sans fil entre un terminal mobile et un véhicule, en particulier un véhicule automobile.

Elle concerne plus particulièrement un procédé d'établissement automatique d'une connexion sans fil entre un terminal mobile et un calculateur multimédia d'un véhicule, le terminal mobile comprenant un capteur adapté pour mesurer le mouvement du terminal mobile (par exemple un capteur inertiel), une mémoire informatique, un premier processeur et un deuxième processeur, le premier processeur étant équipé d'un module d'acquisition et de traitement d'un signal audio.

Elle concerne également un terminal mobile comprenant un capteur adapté pour mesurer un mouvement dudit terminal mobile (par exemple un capteur inertiel), une mémoire informatique, un premier processeur et un deuxième processeur, le premier processeur comprenant un module d'acquisition et de traitement d'un signal audio.

### ARRIERE-PLAN TECHNOLOGIQUE

Les terminaux mobiles, comme les smartphones ou les tablettes numériques, permettent de faciliter l'accès à un grand nombre d'activités du quotidien.

En particulier, grâce aux moyens de connexion sans fil (par exemple de type Bluetooth) des terminaux sans fil, le conducteur d'un véhicule peut passer des appels téléphoniques au travers des haut-parleurs et des microphones d'un véhicule.

Cependant, même s'il est intégré dans quasiment tous les terminaux mobiles aujourd'hui, le Bluetooth est en général désactivé, notamment car les connexions Bluetooth sont à l'origine d'une grande consommation d'énergie et qu'elles peuvent donc affecter l'autonomie du terminal mobile. L'établissement de la connexion sans fil entre le terminal mobile et le véhicule ne s'effectue alors qu'à la suite d'opérations manuelles réalisées par le conducteur. Or, le conducteur oublie fréquemment de les effectuer en entrant dans son véhicule et il ne peut donc pas profiter des équipements du véhicule pour l'utilisation de son terminal mobile.

Le document WO 2017/108370 A1 divulgue un procédé visant à simplifier la connexion entre un terminal mobile et un véhicule basé sur la détection du terminal mobile par le véhicule.

### OBJET DE L'INVENTION

La présente invention propose de rendre la conduite plus agréable et plus sûre en automatisant le processus de connexion entre son terminal mobile et un calculateur multimédia du véhicule.

L'invention concerne un procédé selon la revendication 1 et un terminal mobile selon la revendication 10.

Plus particulièrement, on propose selon l'invention un procédé d'établissement automatique d'une connexion sans fil entre un terminal mobile et un calculateur multimédia d'un véhicule tel que défini dans l'introduction, le procédé comprenant les étapes successives de :
- détection d'un mouvement du terminal mobile par le capteur,
- comparaison par le deuxième processeur du mouvement détecté avec au moins un mouvement caractéristique préenregistré dans la mémoire informatique,
puis, si le mouvement détecté correspond à un mouvement caractéristique préenregistré :
- activation dudit module d'acquisition et de traitement,
- acquisition d'un signal audio présent dans l'environnement du terminal mobile par le premier processeur,
- comparaison d'une composante acoustique relative audit signal audio à une composante acoustique de référence préenregistrée dans la mémoire informatique, puis
- si les composantes acoustiques concordent, tentative d'établissement d'une connexion entre le terminal mobile et le calculateur multimédia du véhicule.

Ainsi, la connexion entre le terminal mobile et le véhicule est automatisée et effectuée si plusieurs conditions sont remplies :
- le capteur inertiel doit détecter un mouvement susceptible de correspondre à l'entrée de l'utilisateur du terminal mobile dans un véhicule (par exemple lorsque l'utilisateur s'assoit dans le véhicule), puis
- la signature acoustique du signal audio détecté doit confirmer la présence de l'individu dans le véhicule (elle doit par exemple correspondre à un bruit sourd de fermeture de portière ou à un signal audio de référence émis par le calculateur multimédia du véhicule).

Lorsque ces conditions sont remplies, le processeur principal du terminal mobile force l'appairage avec le véhicule (sans que l'individu n'ait à effectuer une quelconque action manuelle sur le terminal mobile). L'utilisation de ces conditions permet de mettre en place la connexion uniquement lorsque la probabilité que l'individu et son terminal mobile soient dans le véhicule est forte (la présence de l'individu et de son terminal mobile dans le véhicule est donc confirmée). Cela permet alors de conserver une autonomie maximale du terminal mobile en maximisant le temps qu'il passe en mode basse consommation d'énergie et en n'activant le premier processeur qu'en cas de nécessité, c'est-à-dire une fois que les mouvements du possesseur du terminal mobile laissent à penser que ce dernier est dans le véhicule.

D'autres caractéristiques non limitatives et avantageuses du procédé d'établissement automatique d'une connexion sans fil entre un terminal mobile et un calculateur multimédia d'un véhicule conforme à l'invention, prises individuellement ou selon toutes les combinaisons techniquement possibles, sont les suivantes :
- il est prévu, entre l'étape d'acquisition du signal audio et l'étape de comparaison, une étape de traitement du signal audio détecté afin d'extraire la composante acoustique du signal audio acquis ;
- il est prévu que l'étape d'acquisition du signal audio et l'étape de comparaison soient mises en œuvre seulement pendant un intervalle de temps restreint prédéterminé ;
- il est prévu, après ledit intervalle de temps, une étape de mise en veille du premier processeur si les composantes acoustiques n'ont pas concordé pendant l'intervalle de temps prédéterminé ;
- il est prévu que l'étape de tentative d'établissement de la connexion comporte une tentative d'appairage entre le terminal mobile et le calculateur multimédia du véhicule ;
- il est également prévu, si l'appairage a abouti, une étape d'alerte adaptée pour générer un message de réussite de l'appairage qui est perceptible par un individu situé dans le véhicule automobile ;
- il est prévu, pendant l'étape d'acquisition d'un signal audio présent dans l'environnement du terminal mobile, l'émission d'un signal audio de référence par le calculateur multimédia du véhicule ;
- il est prévu que l'étape de comparaison de la composante acoustique comporte une étape de recherche d'une composante acoustique du signal audio de référence émis par le calculateur multimédia du véhicule dans le signal audio détecté ;
- la composante acoustique de référence correspond à un bruit généré par la fermeture d'une portière du véhicule.

L'invention propose également un terminal mobile tel que décrit dans l'introduction et programmé pour :
- commander le deuxième processeur afin qu'il compare un mouvement détecté dudit terminal mobile à au moins un mouvement caractéristique préenregistré dans la mémoire informatique,
   puis, si le mouvement détecté correspond à un mouvement caractéristique préenregistré, pour
- commander le premier processeur afin qu'il active le module d'acquisition et de traitement du signal audio,
- commander le premier processeur afin qu'il acquière un signal audio présent dans l'environnement du terminal mobile,
- commander le premier processeur afin qu'il compare une composante acoustique du signal audio détecté dans l'environnement du terminal mobile à au moins une composante acoustique de référence préenregistrée dans la mémoire informatique,
   puis si les composantes acoustiques concordent, pour
- commander le premier processeur afin qu'il tente d'établir une connexion entre le terminal mobile et le calculateur multimédia du véhicule.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente une vue schématique d'un véhicule automobile et de son conducteur,
- la figure 2 représente schématiquement un terminal mobile conforme à l'invention, et
- la figure 3 représente sous forme de logigramme un exemple de procédé conforme à l'invention.

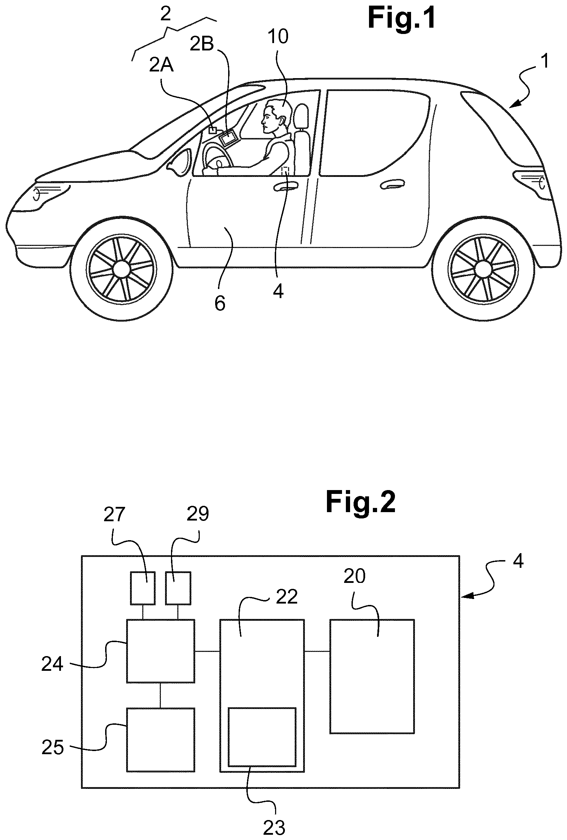

Sur la figure 1, on a représenté un véhicule automobile 1 (également appelé dans la suite « véhicule 1 »). Classiquement ce véhicule automobile 1 comporte quatre roues, un châssis qui supporte notamment un groupe motopropulseur (à savoir un moteur et des moyens de transmission du couple moteur aux roues motrices), des éléments de carrosserie dont au moins une portière avant 6, des éléments d'habitacle et des phares.

Sur la figure 1, on a également représenté un individu 10, ici le conducteur du véhicule 1. L'individu 10 est équipé d'un terminal mobile 4. Il le porte par exemple dans la poche d'un vêtement. En variante, le terminal mobile 4 pourrait être contenu dans un sac posé, par exemple, sur un siège passager ou sur le sol du véhicule 1. En variante encore, le terminal mobile 4 pourrait être posé sur une planche de bord du véhicule 1.

Le terminal mobile 4 est ici un téléphone portable intelligent (ou « smartphone » selon l'appellation d'origine anglo-saxonne couramment utilisée).

En variante, il pourrait s'agir d'un autre type de terminal mobile, par exemple d'une montre connectée, d'une paire de lunettes connectée ou d'une tablette numérique.

Comme représenté sur la figure 1, le véhicule 1 comprend un appareil multimédia 2. Cet appareil multimédia 2 est généralement positionné dans l'habitacle, à l'avant du véhicule 1. Il est par exemple intégré dans la planche de bord, au centre du véhicule 1.

L'appareil multimédia 2 comporte un écran 2B et un calculateur 2A (ci-après appelé calculateur multimédia 2A).

Le calculateur multimédia 2A comprend un processeur, une mémoire et des interfaces d'entrée et de sortie pour communiquer avec l'écran et avec d'autres appareils du véhicule. Il présente diverses fonctionnalités, par exemple de navigation, multimédia (permettant d'écouter de la musique ou de regarder des vidéos) et de gestion des équipements du véhicule 1 (par exemple une caméra de recul ou un indicateur de la consommation de carburant).

Dans le contexte de la présente invention, le calculateur multimédia 2A peut entrer en communication via une liaison sans fil avec le terminal mobile 4 afin d'échanger des données avec ce terminal mobile 4.

Ici la liaison utilisée pour communiquer entre le calculateur multimédia 2A et le terminal mobile 4 est par exemple de type Bluetooth. En variante, il pourrait s'agir d'une liaison WIFI (selon le protocole de communication sans fil régi par les normes du groupe IEEE 802.11) ou NFC (pour « Near-Field Communication » selon l'appellation d'origine anglo-saxonne) ou radiofréquences.

La figure 2 représente schématiquement des composants internes du terminal mobile 4 utiles à la mise en œuvre de l'invention.

Le terminal mobile 4 comprend un capteur inertiel 20, un processeur principal 24, un processeur secondaire 22, et une mémoire informatique.

La mémoire informatique comprend ici deux unités de stockage d'informations distinctes, ci-après appelées première mémoire 25 et deuxième mémoire 23.

En variante, la mémoire informatique pourrait être uniquement constituée d'une seule unité de stockage.

Le capteur inertiel 20 est adapté pour mesurer tout mouvement du terminal mobile 4. En particulier, le capteur inertiel 20 comprend un capteur de position et/ou d'orientation et un capteur de vitesse (non représentés sur la figure 2). Le capteur de position et/ou d'orientation et le capteur de vitesse correspondent par exemple à un gyroscope et/ou un accéléromètre et/ou un magnétomètre. Ils sont adaptés pour déterminer la position et l'orientation du terminal mobile 4 dans l'espace. En particulier, ces capteurs permettent d'enregistrer des séries de mouvements du terminal mobile 4, par exemple des mouvements de translations verticale et horizontale.

Le processeur principal 24 est adapté au traitement des tâches du terminal mobile 4 dites « utiles complexes ». Ainsi, le processeur principal 24 permet par exemple d'exécuter les programmes du système d'exploitation du terminal mobile 4. Parmi les tâches « utiles complexes » on entend également l'acquisition de données audio et/ou vidéo. On considérera ici que le processeur principal 24 est équipé de différents modules comme par exemple un module d'acquisition et de traitement 27 du signal audio visible sur la figure 2.

Le processeur principal 24 est également adapté à exécuter une application (par exemple un jeu ou un navigateur Internet) qui serait mémorisée dans la première mémoire 25.

Le processeur principal 24 est aussi équipé d'un module de communication sans fil 29. Le module de communication sans fil 29 permet d'établir une connexion sans fil (ici de type Bluetooth comme précisé précédemment) avec le calculateur multimédia 2A du véhicule 1. Le calculateur multimédia 2A du véhicule 1 et le module de communication sans fil 29 peuvent donc échanger des données, par exemple, comme exposé ci-dessous, pour utiliser les fonctionnalités d'appel du terminal mobile 4 en toute sécurité dans l'habitacle du véhicule 1.

Comme représenté sur la figure 2, le terminal mobile 4 comprend un processeur secondaire 22. Ce processeur secondaire 22 est moins puissant que le processeur principal 24 (autrement formulé, il est adapté à exécuter des tâches moins rapidement que le processeur principal 24). Le processeur secondaire 22 est adapté pour exécuter des tâches en continu (ou tâches de fond) sur le terminal mobile 4. Par exemple, il permet d'exécuter en continu une application informatique mémorisée dans la deuxième mémoire 23. Dans la configuration ici considérée, la deuxième mémoire 23 est embarquée dans le processeur secondaire 22.

Le processeur secondaire 22 est une unité basse consommation énergétique. Il présente donc un impact négligeable sur l'autonomie du terminal mobile 4 (par rapport à l'utilisation du processeur principal 24). Le processeur secondaire 22 peut donc être utilisé en continu, en « arrière-plan », notamment pour traiter les données transmises par le capteur inertiel 20. Le processeur secondaire 22 permet également d'activer le processeur principal 24 uniquement au moment opportun d'utilisation.

La première mémoire 25 et la deuxième mémoire 23 sont par exemple des mémoires non-volatiles réinscriptibles.

L'invention propose une méthode permettant d'établir de manière automatique une connexion sans fil entre le terminal mobile 4 et le calculateur multimédia 2A du véhicule 1.

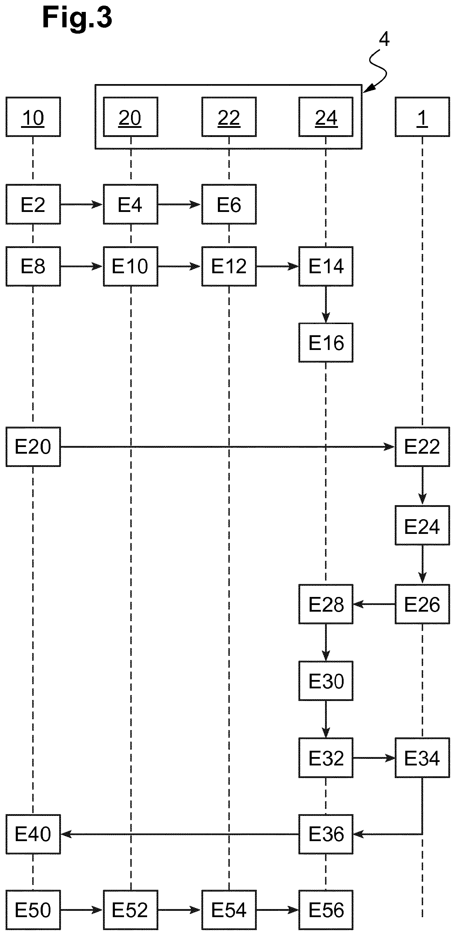

La figure 3 représente un exemple de réalisation du procédé d'établissement automatique de la connexion sans fil entre le terminal mobile 4 et le calculateur multimédia 2A, illustré sous formes d'étapes.

Le calculateur multimédia 2A et le terminal mobile 4 sont pour cela programmés pour mettre en œuvre les étapes de ce procédé de manière récursive, c'est-à-dire en boucle, à pas de temps réguliers.

De manière avantageuse, les étapes de ce procédé seront mises en œuvre dans le cas où la connexion sans fil entre le terminal mobile 4 et le calculateur multimédia 2A n'est pas encore établie. Par exemple, les étapes de ce procédé ne seront pas mises en œuvre si la liaison Bluetooth est déjà active sur le terminal mobile 4. Dans ce cas, le terminal mobile 4 pourra établir directement la connexion avec le calculateur multimédia 2A du véhicule 1 sans mettre en œuvre les étapes du procédé conforme à l'invention.

On se place dans le cas où l'individu 10 a préalablement téléchargé une application informatique dite « constructeur » sur son terminal mobile 4. Cette application informatique constructeur est mémorisée dans la deuxième mémoire informatique 23 et est exécutée par le processeur secondaire 22. Elle agit alors en tant que tâche de fond, en mode basse consommation. Cette application informatique constructeur est adaptée à collecter les mesures effectuées par le capteur inertiel 20, à caractériser ces mesures et émettre un signal permettant d'activer le processeur principal 24 pour l'exécution de tâches « utiles complexes ».

Comme représenté sur la figure 3, le procédé débute à l'étape E2. Lors de cette étape, l'individu 10, qui porte sur lui, par exemple dans l'une de ses poches, son terminal mobile 4, effectue un mouvement. Il peut par exemple s'agir d'un mouvement de type « l'individu 10 marche» ou « l'individu 10 ouvre la portière 6 du véhicule 1 ». Lors de cette étape, le processeur principal 24 du terminal mobile 4 est en état de veille. Cela signifie qu'aucune application ni aucun module liés à ce processeur principal 24 sont exécutés mais qu'ils sont prêts à l'être si un signal les active (par exemple si l'individu 10 ouvre manuellement un navigateur internet). Dans cet état de veille, la consommation énergétique du processeur principal 24 est minimale. Le processeur secondaire 22, en tant que système basse consommation, est lui actif.

A l'étape E4, le capteur inertiel 20 mesure le mouvement effectué par le terminal mobile 4 (suite au mouvement de l'individu 10). Lors de cette étape, le capteur inertiel 20 transmet les mesures acquises au processeur secondaire 22.

A l'étape E6, le processeur secondaire 22 traite et analyse les mesures transmises par le capteur inertiel 20 afin de caractériser le mouvement du terminal mobile 4. Cette étape dite de « pré-caractérisation » consiste à comparer le mouvement mesuré à une séquence de mouvements caractéristiques préenregistrés dans la deuxième mémoire informatique 23. A l'étape E6, le mouvement détecté ne correspondant pas à un mouvement caractéristique préenregistré, aucune action supplémentaire n'est réalisée (et en particulier, le processeur principal 24 est maintenu en état de veille).

Le calculateur multimédia 2A recommence alors en boucle les étapes précédentes jusqu'à ce que, à l'étape E8, l'individu 10 effectue un mouvement particulier. Il s'agit par exemple d'un mouvement du type « l'individu 10 s'assoit dans la voiture» ou « l'individu 10 pose son terminal mobile 4 sur une surface plane dans le véhicule 1 ».

A l'étape E10 (correspondant à l'étape E4 précitée), le capteur inertiel 20 mesure le mouvement effectué par le terminal mobile 4 dans cette configuration et détecte par exemple que « le terminal mobile 4 est sur un individu 10 qui s'assoit » ou que « le terminal mobile 4 vient d'être posé sur une surface plane dans le véhicule 1 ». Le capteur inertiel 20 transmet cette nouvelle mesure au processeur secondaire 22.

En pratique, le capteur inertiel 20 enregistre une série de mouvements (de rotation ou de translations verticale et/ou horizontale) du terminal mobile 4.

A l'étape E12 (correspondant à l'étape E6 précitée), le processeur secondaire 22 compare le mouvement mesuré à l'étape E10 aux mouvements caractéristiques préenregistrés dans la deuxième mémoire informatique 23.

En particulier, la série de mouvements détectée à l'étape E10 est tout d'abord analysée pour extraire des séquences caractéristiques dans le signal. En effet, même si la série de mouvements est dépendante de l'individu, des séquences caractéristiques permettant de reconnaître le mouvement peuvent être distinguées. En pratique, un algorithme impliquant un réseau de neurones artificiels analyse statistiquement la série de mouvements enregistrée (notamment par une étude de corrélation avec un ensemble de mouvements caractéristiques préenregistrés).

Ainsi, à l'étape E12, le processeur secondaire 22 détecte que le mouvement mesuré correspond à l'un des mouvements caractéristiques préenregistrés. Par « correspondance à un mouvement », on entend que l'ensemble des points capturés par le capteur inertiel 20 sont représentatifs d'un mouvement caractéristique préenregistré. Cela signifie en particulier que l'ensemble des points capturés décrivent un motif présentant les caractéristiques essentielles du mouvement caractéristique préenregistré identifié. A l'issue de cette détection, le terminal mobile 4 est possiblement localisé dans le véhicule 1, avec une probabilité suffisante pour activer le processeur principal 24.

Le processeur principal 24 est alors activé à l'étape E14. L'activation du processeur principal 24 consiste à le sortir de son état de veille. Pour cela, l'application informatique exécutée par le processeur secondaire 22 génère un signal dit « de réveil » et le transmet au processeur principal 24. Grâce à la comparaison à la séquence de mouvements caractéristiques préenregistrés, le processeur principal 24 n'est pas activé lorsque ce n'est pas nécessaire (par exemple à la suite de l'étape E6), évitant ainsi une consommation d'énergie inutile.

Le procédé se poursuit ensuite à l'étape E16, étape à laquelle le processeur principal 24 active le module d'acquisition et de traitement 27 du signal audio. A partir de cette étape E16, l'environnement audio du terminal mobile 4 est sondé, par l'intermédiaire par exemple d'un microphone connecté au module d'acquisition et de traitement 27, afin de confirmer la présence du terminal mobile 4 dans le véhicule 1.

L'individu 10 étant assis dans le véhicule 1, il se prépare à utiliser son véhicule en mettant par exemple sous tension ses circuits électriques, à l'étape E20. La mise sous tension des circuits électriques du véhicule 1 entraîne notamment le démarrage du calculateur multimédia 2A du véhicule 1 à l'étape E22.

Après son démarrage, le calculateur multimédia 2A active également son module de connexion Bluetooth, à l'étape E24.

Une fois que le calculateur multimédia 2A est prêt à établir une connexion sans fil Bluetooth, il émet un signal audio de référence, à l'étape E26. Ce signal audio de référence présente une composante acoustique particulière qui, lorsqu'elle est détectée par le terminal mobile 4, permet à ce dernier de savoir qu'il est localisé dans le véhicule 1.

Depuis l'étape E16, le module d'acquisition et de traitement 27 est actif. Ainsi, il caractérise tous les signaux audio (c'est-à-dire le bruit) présents dans l'environnement du terminal mobile 4.

Pour la caractérisation d'un signal audio détecté, par exemple à l'étape E28, il est équipé d'une unité de traitement (non représentée sur la figure 2) adaptée pour opérer un premier traitement sur le signal audio détecté afin d'atténuer les signaux parasites ambiants. L'unité de traitement échantillonne ensuite le signal audio détecté en différentes composantes acoustiques et en extrait une composante acoustique particulière (cette composante acoustique est donc relative au signal audio détecté par le microphone).

Cette composante acoustique particulière est comparée ensuite, à l'étape E30, à des composantes acoustiques caractéristiques préenregistrées dans la première mémoire informatique 25. Parmi les composantes acoustiques caractéristiques préenregistrées, on retrouve ici le signal audio de référence émis par le calculateur multimédia 2A à l'étape E26 (ou une composante de ce signal audio).

Ainsi cette comparaison permet-elle au terminal mobile 4 de détecter le signal audio de référence émis par le calculateur multimédia 2A, ce qui lui permet de confirmer qu'il se trouve effectivement ou non dans le véhicule 1.

A ce stade, on pourra noter qu'en variante, il ne sera pas absolument nécessaire que le calculateur multimédia 2A ait émis un signal audio pour permettre au terminal mobile 4 de confirmer s'il se trouve effectivement ou non dans le véhicule 1. A titre d'exemple, le terminal mobile 4 pourra chercher à détecter non pas un tel signal audio, mais plutôt un bruit correspondant à la fermeture de la portière 6 du véhicule 1. Dans cette variante, les composantes acoustiques préenregistrées correspondront par exemple au bruit de fermeture de la portière 6 du véhicule 1.

En variante encore, le terminal mobile 4 pourra détecter plusieurs signaux audio, par exemple le signal audio de référence émis par le calculateur multimédia 2A et le bruit de fermeture de la portière 6 du véhicule 1. Dans ce cas, tous les signaux audio détectés seront analysés comme étant pertinents pour caractériser la présence du terminal mobile 4 dans le véhicule 1. L'analyse simultanée de plusieurs signaux audio pertinents permettra de renforcer la confirmation de présence du terminal mobile 4 dans le véhicule 1 (et donc de réduire des erreurs de détection).

Quoi qu'il en soit, cette étape E30 de comparaison de composantes acoustiques est mise en œuvre pendant un intervalle de temps limité. Autrement formulé, le module d'acquisition et de traitement 27 du signal audio est activé après détection du mouvement caractéristique pendant un intervalle de temps restreint prédéterminé. L'intervalle de temps restreint prédéterminé est inférieur à quelques minutes, typiquement de l'ordre d'une dizaine de secondes.

Si, à l'issue de cette étape E30, aucun signal audio détecté ne possède une composante acoustique correspondant à l'une de celles préenregistrées dans la première mémoire informatique 25, le processeur principal 24 est à nouveau mis en état de veille afin de limiter la consommation d'énergie du terminal mobile 4, puis le procédé redémarre à l'étape E2. En revanche, si, pendant cet intervalle de temps prédéterminé, la composante acoustique du signal détecté concorde avec une composante acoustique caractéristique préenregistrée, le processeur principal 24 active directement le module de communication sans fil 29 (étape E32). En effet, suite à la détection d'un mouvement et d'un composante acoustique caractéristiques, la probabilité que le terminal mobile 4 soit présent dans le véhicule 1 est maximale. Le terme « concordance » entre les composantes acoustiques signifie que les composantes acoustiques mises en jeu présentent suffisamment de similarités (identifiées grâce à l'algorithme impliquant un réseau de neurones artificiels) afin de pouvoir les considérer comme sensiblement identiques.

A l'étape E34, une fois le module de communication sans fil 29 activé, une tentative d'établissement de connexion sans fil, ici Bluetooth, est réalisée avec le calculateur multimédia 2A du véhicule 1. Il s'agit d'une étape d'appairage entre le terminal mobile 4 et le calculateur multimédia 2A. On pourra ici noter qu'afin que la connexion sans fil soit établie automatiquement, il est nécessaire que l'appairage entre le terminal mobile 4 et le calculateur multimédia 2A ait été réalisé au moins une fois au préalable. Cela permet notamment que les identifiants des deux entités soient connus de part et d'autre et mémorisés. Leur mémorisation permet de rendre les connexions sans fil ultérieures automatiques (il n'est pas nécessaire de les autoriser ou de confirmer les identifiants).

A l'étape E36, le processeur principal 24 (ou le calculateur multimédia 2A) génère un message de réussite de l'appairage entre le terminal mobile 4 et le calculateur multimédia 2A. Ce message peut être une alerte sonore ou une alerte visuelle. Elle est donc perceptible par l'individu 10.

Finalement, à l'étape E40, l'individu peut par exemple utiliser les haut-parleurs du véhicule 1 afin de prendre un appel téléphonique arrivant sur son terminal mobile 4.

Comme représenté sur la figure 3, le procédé comprend également une étape E50. Lors de cette étape E50, l'individu 10 effectue un autre mouvement. Il peut s'agir d'un mouvement de type « l'individu se lève et sort du véhicule 1 » ou « l'individu ferme la portière 6 du véhicule 1 ». Lors de cette étape, la connexion sans fil entre le terminal mobile 4 et la calculateur multimédia 2A du véhicule 1 est établie. Cela signifie en particulier que le processeur principal 24 du terminal mobile 4 est actif.

A l'étape E52, le capteur inertiel 20 mesure le mouvement effectué par le terminal mobile 4 (à la suite de l'autre mouvement de l'individu 10). Lors de cette étape, le capteur inertiel 20 transmet les mesures acquises au processeur secondaire 22.

A l'étape E54, comme c'était le cas également à l'étape E6, le processeur secondaire 22 traite et analyse les mesures transmises par le capteur inertiel 20 afin de caractériser le mouvement du terminal mobile 4. Comme à l'étape E6, le mouvement mesuré sera comparé à la séquence de mouvements caractéristiques préenregistrés dans la deuxième mémoire informatique 23.

Lors de cette étape E54, le processeur secondaire 22 détecte que le mouvement mesuré à l'étape E52 correspond à l'un des mouvements caractéristiques préenregistrés. Cette fois, contrairement à l'étape E12, cela signifie que le terminal mobile 4 n'est possiblement plus localisé à l'intérieur du véhicule 1. La probabilité est suffisante pour remettre le processeur principal 24 dans un état de veille.

Finalement, à l'étape E56, l'individu 10, qui porte le terminal mobile 4, est identifié comme étant à l'extérieur du véhicule 1. Le module de communication sans fil 29 est alors désactivé et le processeur principal 24 remis en état de veille afin de limiter sa consommation énergétique.

## Revendications

1. Procédé d'établissement automatique d'une connexion sans fil entre un terminal mobile (4) et un calculateur multimédia (2A) d'un véhicule (1), le terminal mobile (4) comprenant un capteur (20) adapté pour mesurer le mouvement dudit terminal mobile (4), une mémoire informatique (23, 25), un premier processeur (24) et un deuxième processeur (22), le premier processeur (24) étant équipé d'un module d'acquisition et de traitement (27) d'un signal audio, le procédé comprenant les étapes successives de :
- détection d'un mouvement du terminal mobile (4) par le capteur (20),
- comparaison par le deuxième processeur (22) du mouvement détecté avec au moins un mouvement caractéristique préenregistré dans la mémoire informatique (23, 25),
puis, si le mouvement détecté correspond à un mouvement caractéristique préenregistré :
- activation dudit module d'acquisition et de traitement (27),
- acquisition d'un signal audio présent dans l'environnement du terminal mobile (4) par le premier processeur (24),
- comparaison d'une composante acoustique relative audit signal audio à une composante acoustique de référence préenregistrée dans la mémoire informatique (23, 25), puis
- si les composantes acoustiques concordent, tentative d'établissement d'une connexion entre le terminal mobile (4) et le calculateur multimédia (2A) du véhicule.

2. Procédé d'établissement automatique d'une connexion selon la revendication 1, comprenant également, entre l'étape d'acquisition du signal audio et l'étape de comparaison, une étape de traitement du signal audio détecté afin d'extraire la composante acoustique du signal audio acquis.

3. Procédé d'établissement automatique d'une connexion selon la revendication 1 ou 2, dans lequel l'étape d'acquisition du signal audio et l'étape de comparaison sont mises en œuvre seulement pendant un intervalle de temps restreint prédéterminé.

4. Procédé d'établissement automatique d'une connexion selon la revendication 3, comportant, après ledit intervalle de temps, une étape de mise en veille du premier processeur (24) si les composantes acoustiques n'ont pas concordé pendant l'intervalle de temps prédéterminé.

5. Procédé d'établissement automatique d'une connexion selon l'une quelconque des revendications 1 à 4, dans lequel l'étape de tentative d'établissement de la connexion comporte une tentative d'appairage entre le terminal mobile (4) et le calculateur multimédia (2A) du véhicule (1).

6. Procédé d'automatisation d'établissement automatique d'une connexion selon la revendication 5, comportant également, si l'appairage a abouti, une étape d'alerte adaptée pour générer un message de réussite de l'appairage qui est perceptible par un individu (10) situé dans le véhicule automobile (1).

7. Procédé d'établissement automatique d'une connexion selon l'une quelconque des revendications 1 à 6, comportant, pendant l'étape d'acquisition d'un signal audio présent dans l'environnement du terminal mobile (4), l'émission d'un signal audio de référence par le calculateur multimédia (2A) du véhicule (1).

8. Procédé d'établissement automatique d'une connexion selon la revendication 7, dans lequel, l'étape de comparaison de la composante acoustique comporte une étape de recherche d'une composante acoustique du signal audio de référence émis par le calculateur multimédia (2A) du véhicule (1) dans le signal audio détecté.

9. Procédé d'établissement automatique d'une connexion selon l'une quelconque des revendications 1 à 8, dans lequel la composante acoustique de référence correspond à un bruit généré par la fermeture d'une portière (6) du véhicule (1).

10. Terminal mobile (4) comprenant un capteur (20) adapté pour mesurer un mouvement dudit terminal mobile (4), une mémoire informatique (23, 25), un premier processeur (24) et un deuxième processeur (22), le premier processeur (24) étant équipé d'un module d'acquisition et de traitement (27) d'un signal audio, le terminal mobile étant programmé pour:
- commander le deuxième processeur (22) afin qu'il compare un mouvement détecté dudit terminal mobile (4) à au moins un mouvement caractéristique préenregistré dans la mémoire informatique (23, 25),
puis, si le mouvement détecté correspond à un mouvement caractéristique préenregistré, pour
- commander le premier processeur (24) afin qu'il active le module d'acquisition et de traitement (27) du signal audio,
- commander le premier processeur (24) afin qu'il acquière un signal audio présent dans l'environnement du terminal mobile (4),
- commander le premier processeur (24) afin qu'il compare une composante acoustique du signal audio détecté dans l'environnement du terminal mobile (4) à au moins une composante acoustique de référence préenregistrée dans la mémoire informatique (23, 25),
puis si les composantes acoustiques concordent, pour
- commander le premier processeur (24) afin qu'il tente d'établir une connexion entre le terminal mobile (4) et le calculateur multimédia (2A) du véhicule (1).

## Patentansprüche

1. Verfahren zum automatischen Aufbau einer drahtlosen Verbindung zwischen einem mobilen Endgerät (4) und einem Multimedia-Rechner (2A) eines Fahrzeugs (1), wobei das mobile Endgerät (4) einen Sensor (20), der geeignet ist, die Bewegung des mobilen Endgeräts (4) zu messen, einen Computerspeicher (23, 25), einen ersten Prozessor (24) und einen zweiten Prozessor (22) enthält, wobei der erste Prozessor (24) mit einem Modul zur Erfassung und Verarbeitung (27) eines Audiosignals ausgestattet ist, wobei das Verfahren die folgenden aufeinanderfolgenden Schritte enthält:
- Erfassung einer Bewegung des mobilen Endgeräts (4) durch den Sensor (20),
- Vergleich der erfassten Bewegung mit mindestens einer vorab im Computerspeicher (23, 25) gespeicherten charakteristischen Bewegung durch den zweiten Prozessor (22),
dann, wenn die erfasste Bewegung einer vorab gespeicherten charakteristischen Bewegung entspricht:
- Aktivierung des Erfassungs- und Verarbeitungsmoduls (27),
- Erfassung eines in der Umgebung des mobilen Endgeräts (4) vorhandenen Audiosignals durch den ersten Prozessor (24),
- Vergleich einer akustischen Komponente bezüglich des Audiosignals mit einer vorab im Computerspeicher (23, 25) gespeicherten akustischen Bezugskomponente, dann
- wenn die akustischen Komponenten übereinstimmen, Versuch des Aufbaus einer Verbindung zwischen dem mobilen Endgerät (4) und dem Multimedia-Rechner (2A) des Fahrzeugs.

2. Verfahren zum automatischen Aufbau einer Verbindung nach Anspruch 1, das ebenfalls zwischen dem Schritt der Erfassung des Audiosignals und dem Vergleichsschritt einen Schritt der Verarbeitung des erfassten Audiosignals enthält, um die akustische Komponente aus dem erfassten Audiosignal zu entnehmen.

3. Verfahren zum automatischen Aufbau einer Verbindung nach Anspruch 1 oder 2, wobei der Schritt der Erfassung des Audiosignals und der Vergleichsschritt nur während eines vorbestimmten beschränkten Zeitfensters durchgeführt werden.

4. Verfahren zum automatischen Aufbau einer Verbindung nach Anspruch 3, das nach dem Zeitfenster einen Schritt des Versetzens des ersten Prozessors (24) in den Standby-Zustand aufweist, wenn die akustischen Komponenten während des vorbestimmten Zeitfensters nicht übereingestimmt haben.

5. Verfahren zum automatischen Aufbau einer Verbindung nach einem der Ansprüche 1 bis 4, wobei der Schritt eines Aufbauversuchs der Verbindung einen Versuch der paarweisen Zuordnung zwischen dem mobilen Endgerät (4) und dem Multimedia-Rechner (2A) des Fahrzeugs (1) aufweist.

6. Verfahren zur Automatisierung eines automatischen Aufbaus einer Verbindung nach Anspruch 5, das ebenfalls, wenn die paarweise Zuordnung erfolgreich war, einen Meldeschritt aufweist, der geeignet ist, eine Nachricht des Erfolgs der paarweisen Zuordnung zu erzeugen, die für eine sich im Kraftfahrzeug (1) befindende Person (10) merkbar ist.

7. Verfahren zum automatischen Aufbau einer Verbindung nach einem der Ansprüche 1 bis 6, das während des Schritts der Erfassung eines in der Umgebung des mobilen Endgeräts (4) vorhandenen Audiosignals das Senden eines Bezugs-Audiosignals durch den Multimedia-Rechner (2A) des Fahrzeugs (1) aufweist.

8. Verfahren zum automatischen Aufbau einer Verbindung nach Anspruch 7, wobei der Vergleichsschritt der akustischen Komponente einen Schritt des Suchens einer akustischen Komponente des vom Multimedia-Rechner (2A) des Fahrzeugs (1) gesendeten Bezugs-Audiosignals im erfassten Audiosignal aufweist.

9. Verfahren zum automatischen Aufbau einer Verbindung nach einem der Ansprüche 1 bis 8, wobei die akustische Bezugskomponente einem Geräusch entspricht, das durch das Schließen einer Tür (6) des Fahrzeugs (1) erzeugt wird.

10. Mobiles Endgerät (4), das einen Sensor (20), der geeignet ist, eine Bewegung des mobilen Endgeräts (4) zu messen, einen Computerspeicher (23, 25), einen ersten Prozessor (24) und einen zweiten Prozessor (22) enthält, wobei der erste Prozessor (24) mit einem Erfassungs- und Verarbeitungsmodul (27) eines Audiosignals ausgestattet ist,
wobei das mobile Endgerät programmiert ist, um:
- den zweiten Prozessor (22) zu steuern, damit er eine erfasste Bewegung des mobilen Endgeräts (4) mit mindestens einer vorab im Computerspeicher (23, 25) gespeicherten charakteristischen Bewegung vergleicht,
dann, wenn die erfasste Bewegung einer vorab gespeicherten charakteristischen Bewegung entspricht, um
- den ersten Prozessor (24) zu steuern, damit er das Erfassungs- und Verarbeitungsmodul (27) des Audiosignals aktiviert,
- den ersten Prozessor (24) zu steuern, damit er ein in der Umgebung des mobile Endgeräts (4) vorhandenes Audiosignal erfasst,
- den ersten Prozessor (24) zu steuern, damit er eine akustische Komponente des in der Umgebung des mobilen Endgeräts (4) erfassten Audiosignals mit mindestens einer im Computerspeicher (23, 25) vorab gespeicherten akustischen Bezugskomponente vergleicht,
dann, wenn die akustischen Komponenten übereinstimmen, um
- den ersten Prozessor (24) zu steuern, damit er versucht, eine Verbindung zwischen dem mobilen Endgerät (4) und dem Multimedia-Rechner (2A) des Fahrzeugs (1) aufzubauen.

## Claims

1. Method for automatically setting up a wireless connection between a mobile terminal (4) and a multimedia computer (2A) of a vehicle (1), the mobile terminal (4) comprising a sensor (20) designed to measure the movement of said mobile terminal (4), a computer memory (23, 25), a first processor (24) and a second processor (22), the first processor (24) being provided with a module (27) for acquiring and processing an audio signal, the method comprising the successive steps of:
- detecting a movement of the mobile terminal (4) by means of the sensor (20),
- comparing, by means of the second processor (22), the detected movement with at least one characteristic movement pre-recorded in the computer memory (23, 25),
then, if the detected movement corresponds to a pre-recorded characteristic movement:
- activating said acquisition and processing module (27),
- acquiring an audio signal present in the environment of the mobile terminal (4) by means of the first processor (24),
- comparing an acoustic component pertaining to said audio signal with a reference acoustic component pre-recorded in the computer memory (23, 25), then
- if the acoustic components match, attempting to set up a connection between the mobile terminal (4) and the multimedia computer (2A) of the vehicle.

2. Method for automatically setting up a connection according to Claim 1, also comprising, between the step of acquiring the audio signal and the comparing step, a step of processing the detected audio signal in order to extract the acoustic component from the acquired audio signal.

3. Method for automatically setting up a connection according to Claim 1 or 2, wherein the step of acquiring the audio signal and the comparing step are implemented only during a predetermined restricted time interval.

4. Method for automatically setting up a connection according to Claim 3, including, after said time interval, a step of putting said first processor (24) on standby if the acoustic components have not matched during the predetermined time interval.

5. Method for automatically setting up a connection according to any one of Claims 1 to 4, wherein the step of attempting to set up the connection includes an attempted pairing between the mobile terminal (4) and the multimedia computer (2A) of the vehicle (1).

6. Method for automatically setting up a connection according to Claim 5, also including, if the pairing has been successful, an alert step, which is designed to generate a successful pairing message perceptible by an individual (10) located in the motor vehicle (1).

7. Method for automatically setting up a connection according to any one of Claims 1 to 6, including, during the step of acquiring an audio signal present in the environment of the mobile terminal (4), transmitting a reference audio signal by means of the multimedia computer (2A) of the vehicle (1).

8. Method for automatically setting up a connection according to Claim 7, wherein the step of comparing the acoustic component includes a step of searching for an acoustic component of the reference audio signal transmitted by the multimedia computer (2A) of the vehicle (1) in the detected audio signal.

9. Method for automatically setting up a connection according to any one of Claims 1 to 8, wherein the reference acoustic component corresponds to a noise generated by the closing of a door (6) of the vehicle (1) .

10. Mobile terminal (4) comprising a sensor (20) designed to measure a movement of said mobile terminal (4), a computer memory (23, 25), a first processor (24) and a second processor (22), the first processor (24) being provided with a module (27) for acquiring and processing an audio signal, the mobile terminal being programmed to:
- control the second processor (22) in order for said second processor to compare a detected movement of said mobile terminal (4) with at least one characteristic movement pre-recorded in the computer memory (23, 25),
then, if the detected movement corresponds to a pre-recorded characteristic movement, to
- control the first processor (24) in order for said first processor to activate the module (27) for acquiring and processing the audio signal,
- control the first processor (24) in order for said first processor to acquire an audio signal present in the environment of the mobile terminal (4),
- control the first processor (24) in order for said first processor to compare an acoustic component of the audio signal detected in the environment of the mobile terminal (4) with at least one reference acoustic component pre-recorded in the computer memory (23, 25),
then, if the acoustic components match, to
- control the first processor (24) in order for said first processor to attempt to set up a connection between the mobile terminal (4) and the multimedia computer (2A) of the vehicle (1).
